# EUROPEAN PATENT SPECIFICATION

(11) **EP 3 279 866 B1**
(45) Date of publication and mention of the grant of the patent: **12.08.2020**
(21) Application number: 16771291.8
(22) Date of filing: 22.03.2016
(51) Int. Cl.: G06T 11/60

(54) **METHOD AND APPARATUS FOR GENERATING SYNTHETIC PICTURE**
VERFAHREN UND VORRICHTUNG ZUR ERZEUGUNG EINES SYNTHETISCHEN BILDES
PROCÉDÉ ET APPAREIL DE GÉNÉRATION D'IMAGE SYNTHÉTIQUE

(30) Priority: 30.03.2015 CN 201510144685
(43) Date of publication of application: 07.02.2018
(60) Divisional application: 19205490.6
(73) Proprietor: Alibaba Group Holding Limited, Grand Cayman (KY)
(72) Inventor: ZHANG, Yu, Hangzhou 310099 (CN); DU, Zhijun, Hangzhou 310099 (CN); WANG, Nan, Hangzhou 310099 (CN); DING, Wei, Hangzhou 310099 (CN); HE, Qiang, Hangzhou 310099 (CN)
(74) Representative: Conroy, John
(86) International application number: PCT/CN2016/076950
(87) International publication number: WO 2016/155536

(56) References cited:
- WO-A1-2008/133357
- CN-A- 101 174 305
- CN-A- 101 442 600
- CN-A- 102 158 644
- CN-A- 102 262 787
- CN-A- 102 938 863
- GB-A- 2 378 340
- US-A1- 2013 016 902
- US-A1- 2014 132 789

## Description

### Technical field

The present application relates to the technical field of image processing, and in particular to a method and apparatus for generating a synthesized picture.

### Background art

Internet-based promotion activities are often in the form of presenting or diffusing pictures on web pages and social media platforms. Always using the same picture may easily lead to user's psychological fatigue, and in order to achieve a better effect, the pictures presented need to be changed frequently.

The pictures used for promotion activities are usually pictures generated by synthesizing a background image and foreground elements. In the prior art, a single template method is usually used to synthesize a background image and foreground elements into one picture, i.e. drawing the foreground elements on a fixed background image at fixed positions. Changing the picture requires the art designer to regenerate a template, or modify the background image, or modify the foreground elements, which consumes a long time and has a low efficiency, and hardly satisfies the requirement of generating a large number of synthesized pictures within a short time in some promotion activities.

Patent publication WO 2008/133357 A1, for "Photo Synthesis Service System and Method," published 6 November 2008, discloses a picture synthesis service system, in which if a user selects a picture of a tourist attraction provided online and uploads a picture of the user himself or herself, the uploaded picture is synthesized with the selected picture of the tourist attraction to provide a desired synthesized picture.

Patent publication GB 2 378 340 A, for "Generation of an image bounded by a frame or of overlapping images," published 5 February 2003, discloses a method of analyzing an image according to a compositional rule, in particular one which identifies "must include" areas, and "must exclude" areas, is used to select an image boundary which best fits the image, particularly which excludes the majority of "must exclude" regions. The image boundary may be selected from a plurality of geometric shapes, which may be defined or modified by the user. Also disclosed is a method of inserting cropped images into a predefined arrangement of image boundaries.

### Summary of the invention

In view of this, the present application discloses an example method for generating a synthesized picture, comprising:
determining, based on a background picture set, a background image of the synthesized picture;
dividing sub-regions for foreground elements on the background image, each sub-region being used for displaying at least one foreground element;
determining, within a sub-region, a display shape of a foreground element of the sub-region; and
drawing, according to the display shape, the corresponding foreground element within the sub-region.

The present application further discloses an example apparatus for generating a synthesized picture, comprising:
a background image determination unit, configured to determine, based on a background picture set, a background image of the synthesized picture;
a sub-region dividing unit, configured to divide sub-regions for foreground elements on the background image, each sub-region being used for displaying at least one foreground element;
a display shape determination unit, configured to determine, within a sub-region, a display shape of a foreground element of the sub-region; and
a foreground element drawing unit, configured to draw, according to the display shape, the corresponding foreground element within the sub-region.

The scope of the invention is defined in the claims.

It can be seen from the above technical solution that in the embodiments of the present application, by selecting a background image, and dynamically generating sub-regions and display shapes of foreground elements, a large number of synthesized pictures, which have variable background images, variable region layouts and variable foreground element display shapes, can be generated automatically within a short time, which improves the efficiency of generating synthesized pictures.

### Brief description of the accompanying drawings

Fig. 1 is a flow chart of a method for generating a synthesized picture in an embodiment of the present application;
Fig. 2 is a sub-region layout diagram in one example of the present application;
Fig. 3 is another sub-region layout diagram in one example of the present application;
Fig. 4 is a schematic diagram of a display shape of a text line in one example of the present application;
Fig. 5 is a schematic diagram of a display shape of a foreground image in one example of the present application;
Fig. 6 is a hardware structure diagram of a computing device which applies an embodiment of the present application; and
Fig. 7 is a logical structure diagram of an apparatus for generating a synthesized picture in an embodiment of the present application.

### Detailed description

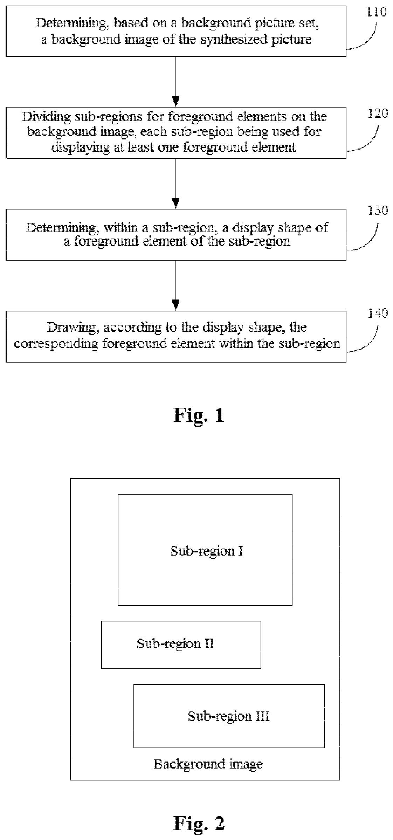

The embodiments of the present application propose a novel method for generating a synthesized picture, in which an automatically changed background image, and automatically changed foreground element layouts and positions are applied to generate a synthesized picture, and a large number of different synthesized pictures can be generated within a short time, so as to solve the problem existing in the prior art. The procedure of the embodiments of the present application is as shown in Fig. 1.

Step 110, determining, based on a background picture set, a background image of the synthesized picture.

Generally, a synthesized picture comprises a background image having a relatively large region and not covered by foreground elements. The larger the background image region which is not covered by the foreground elements is, the easier it is to use parameters generated according to the background image to recognize the synthesized picture. The variable background image may increase the recognition difficulty of the synthesized picture. In this embodiment, a background picture set is pre-set, which comprises at least one background picture. A background picture is selected from the background picture set, and a background image of the synthesized picture is generated according to the selected background picture.

A variety of methods can be used to select a background picture from the background picture set. For example, each background picture in the background picture set may be selected in turn, or a background picture may be selected randomly from the background picture set; and a background picture may be reselected when the number of use of the synthesized picture reaches a certain pre-determined value, and a background picture may also be reselected by taking a certain time as a period.

Similarly, various methods may also be used to generate the background image of the synthesized picture according to the selected background picture. For example, the selected background picture may be directly used as the background image of the synthesized picture, or the selected background picture may be used as the background image of the synthesized picture after being subjected to special processing (such as Gaussian blurring processing, light treatment processing or mask processing). A fixed algorithm and parameters may be used to perform special processing, and a randomly changed or periodically changed algorithm and/or parameters may also be used to perform special processing.

The method for selecting the background picture and the method for generating the background image of the synthesized picture may be used in any combination, and this is not limited in this embodiment.

Step 120, dividing sub-regions for foreground elements on the background image, each sub-region being used for displaying at least one foreground element.

The method for dividing sub-regions on the background image may be determined according to the relationship among foreground elements of various sub-regions and the requirement of an actual application scenario. If all the foreground elements can be displayed arbitrarily at any positions on the background image, then according to the number of foreground elements, a corresponding number of sub-regions may be generated, and the position and size of each sub-region is determined randomly. If the display of all or some of the foreground elements needs to satisfy a certain condition (such as a certain position relationship or a certain size proportion relationship), then associated foreground elements may be displayed within the same sub-region, or a corresponding limitation condition may be applied to the division of various sub-regions which display associated foreground elements.

In one implementation, a configuration file may be pre-set, and a limitation condition for dividing sub-regions is described in the configuration file, so as to satisfy display requirements of the foreground elements. The configuration file comprises the number of sub-regions and a position relationship of at least some of the sub-regions, and the specific position of each sub-region is automatically generated by a layout algorithm using the configuration file. Specifically, after the number and position relationship of the sub-regions are obtained from the configuration file, a region where a dynamic change is allowed for each sub-region on the background image is calculated according to the position relationship, and the vertex positions and size of the sub-region are determined within the region where a dynamic change is allowed. The specific layout algorithm may refer to the implementation of the prior art, and will be no longer described. The configuration file may further comprise a maximum value and/or minimum value of the shape and size of a sub-region, etc., and at this moment, the shape and size of the sub-region and its position relationship with other sub-regions need to be taken into consideration to allocate a region where a dynamic change is allowed for each sub-region. Within the region where a dynamic change is allowed, the vertex positions and size of the sub-region may be arbitrarily determined under the condition of satisfying the configuration file.

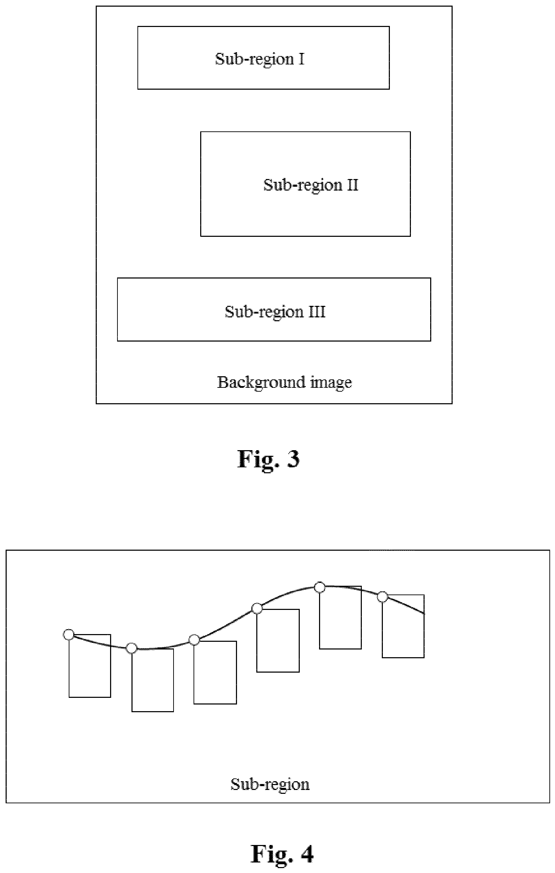

For example, it is designated in the configuration file that three sub-regions are divided, and are arranged as a sub-region I, a sub-region II and a sub-region III successively from top to bottom, then a certain running of a layout algorithm generates a sub-region layout as shown in Fig. 2, and another running of the layout algorithm generates a sub-region layout as shown in Fig. 3.

Back to Fig. 1, in step 130, determining, within a sub-region, a display shape of a foreground element of the sub-region.

The foreground element may be a foreground image, and may also be a text line; and the text line may be one to more text units, wherein the text unit is a constituent part of the text line, which may be a word (such as a Chinese word and an English word), a letter, a number and/or symbol, and may also be a combination of two or three of the word, letter and number.

Within the sub-region, different shapes may be used to display the foreground element of the sub-region (i.e. the foreground element displayed within the sub-region). For example, a set comprising shapes of the original shape, a circular shape, a square shape, etc. may be provided, and one is selected therefrom randomly or in turn as the display shape of the foreground element; and in this implementation method, if the foreground element is a text line, each text may be displayed in the selected shape, and the texts may also be arranged in the selected shape.

In another implementation, several curve functions are pre-set; and the value ranges of parameters in the pre-set curve functions are pre-set, and the pre-set ranges of the parameters may vary with the different applicable curve functions, and the pre-set range should enable the display curve, generated after the parameter is applied to the curve function, to be partially located within the sub-region.

If the foreground element using the display curve is a text line, one curve function may be selected from several pre-set curve functions; the parameters of the curve function are determined within the pre-set range, and a display curve is generated; and according to the number of text units in the text line, a corresponding number of points from the display curve are extracted as vertex positions of the text units. For example, with regard to the text line, including six Chinese characters, which uses the display curve as shown in Fig. 4, the part of the display curve, of which the horizontal coordinates are located within the sub-region, may be equally divided into six parts, taking the start point of each equal part as the horizontal coordinate, and taking the point of which the horizontal coordinate is on the display curve as a vertex position of each Chinese character. In this way, the text line will be displayed as the shape of the display curve, please refer to Fig. 4.

If the foreground element using the display curve is a foreground image, at least one curve function may be selected from pre-set curve functions; parameters of the selected curve function are determined within a pre-set range, and at least one display curve is generated; and points are extracted from the display curve as vertex positions of the foreground image, and the generated display curve is taken as a display boundary of the foreground image. For example, one curve function may be selected, and two parallel display curves are generated with different parameters to respectively serve as upper and lower boundaries (or left and right boundaries) of the foreground image, while straight lines parallel to the vertical axis (or horizontal axis) where the two extracted points are located respectively serve as left and right boundaries (or upper and lower boundaries) of the foreground image; and two curve functions may also be selected to generate two intersected display curves to respectively serve as an upper boundary and a left boundary of the foreground image, while a lower boundary and a right boundary of the foreground image use the lower boundary and right boundary of the sub-region, and at this time, the intersection point of the two display curves serves as the extracted vertex position.

In some application scenarios, after the foreground image has been drawn on the background image, the text line is drawn on the foreground image. In this case, the display shape of the text line is determined on the foreground image displaying the text line. In other words, it can be regarded as taking the foreground image displaying the text line as a sub-region when the display shape of the text line is determined.

Step 140, drawing, according to the display shape of the foreground element, the corresponding foreground element within the sub-region.

With regard to the foreground image, if the display shape is different from the original shape or size of the foreground image, then after affine transformation, perspective transformation and/or scaling transformation are performed on the foreground image according to the determined display shape, the foreground element can be drawn within the sub-region. In addition, processing of color transformation, rotation, stretching, etc. may also be performed on the foreground image. This embodiment does not limit the specific transformation processing method.

With regard to the text line, in order to reduce the utilization of a text detection algorithm to locate a text region, an OCR (Optical Character Recognition) method is used to segment and recognize the text; a key word in the text is used to shield the possibility of a picture; and after texture and/or deformation are/is added to each text according to the determined display shape, the text line may then be drawn within the sub-region. The deformation may be operations of rotation and stretching, etc. regarding a text unit; the texture may be horizontal and vertical stripes at different intervals, and may also be various curve stripes; and in a region where text and stripes are overlapped, a background image may be displayed, and a certain color fusion of the foreground text and the background image may also be displayed. This embodiment does not limit the specific processing method.

It can be seen that in the embodiments of the present application, by selecting a background image, and dynamically generating sub-regions and display shapes of foreground elements, a large number of synthesized pictures which have variable background images, variable region layouts and variable foreground element shapes can be generated within a short time, which improves the efficiency of generating synthesized pictures and reduces the costs of picture diversification at the same time.

It needs to be noted that the method in this embodiment can be applied to any computing device, such as a server, a virtual machine, a personal computer, a tablet computer, a mobile phone and other devices. In an application of a client/server (C/S) mode, the method in this embodiment can be partially applied to the server and partially applied to the client, and the server and the client collaboratively accomplish the generation of the synthesized picture.

In an application example of the present application, the synthesized picture is generated by a background image, a foreground image and a text line. Materials for synthesizing a picture are stored on a server, comprising a background picture set composed of a plurality of background pictures, various foreground images, and various text lines, etc., wherein the foreground image comprises an image of which the position can be dynamically changed on the background image, such as a logo; and the text line may be generating each text unit into an image and a display order of these images, and may also be text which is converted into an image using a system character library when the text line is drawn. In addition, a configuration file for dividing sub-regions on the background image, a plurality of curve functions for determining a display shape of a foreground element, and information such as pre-set value ranges of parameters thereof are pre-set on the server.

When the server needs to generate a synthesized picture (such as receiving a request from the client to acquire a synthesized picture, arriving of a period of changing the synthesized picture, etc.), a background picture is randomly selected from the background picture set, and is used as the background image of the synthesized picture after Gaussian blurring processing are performed on the background picture with randomly selected parameters. Different parameters may enable the same background picture to present images with different feature information, which effectively reduces the common characteristics of the background images, and keeps artistic at the same time.

After the background image is determined, a layout algorithm is called to calculate, according to a position relationship among sub-regions and the range of the size of each sub-region in the configuration file, a region where a dynamic change is allowed for each sub-region, and the vertex positions and actual size (within the range of the size in the configuration file) of the sub-region are randomly decided within the region where a dynamic change is allowed. Thus, various sub-regions for displaying the foreground image and/or text line are dynamically divided, to decide the position in the background image where a foreground element to be presented is put. The entire background image determines the overall style of the synthesized picture, and the position and size of each sub-region determines the type setting of the synthesized picture.

The foreground element of each sub-region may be a text line, may be one to more foreground images, and may also be a combination of a text line and a foreground image. When the foreground element is drawn in the sub-region, with regard to the text line, one curve function is randomly selected from a plurality of stored curve functions, parameter values are randomly determined within the value ranges of the parameters of the curve function, and the parameter values are applied to the curve function to generate a display curve. By extracting point coordinates from the display curve, the vertex coordinate of each text unit in the text line can be obtained. Based on the vertex coordinate of each text unit, after deformation and texture processing, etc. are performed on the text unit, it is drawn at a corresponding position on the background image at a certain size.

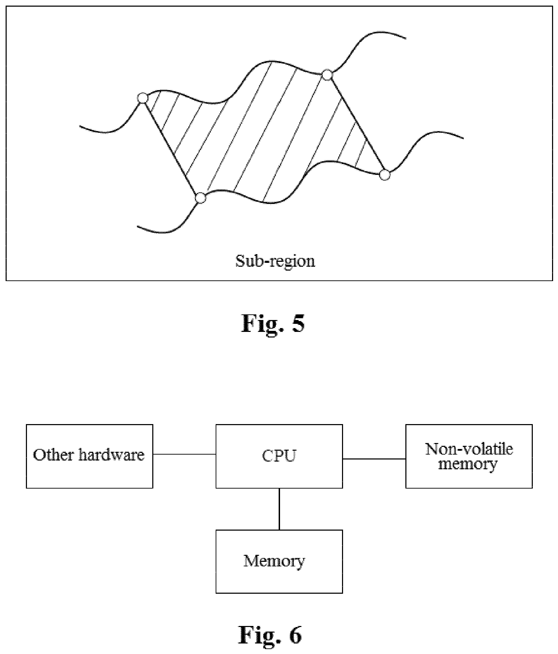

With regard to the foreground image, one curve function is randomly selected from a plurality of stored curve functions, parameter values are randomly determined within the value ranges of the parameters of the curve function, and the parameter values are applied to the curve function to generate a first display curve; the display curve is translated by a certain distance to serve as a second display curve (or generating a second display curve with another parameter value), and two points are extracted from the first display curve as two vertex positions of the foreground image; and the two points are translated onto the second display curve to serve as another two vertex positions of the foreground image, and the first display curve between the two vertex positions and the second display curve between the other two vertex positions serve as two display boundaries of the foreground image. For example, as shown in Fig. 5, the shaded portion is the display shape of the foreground image, and the upper boundary and the lower boundary of the shaded portion are respectively display curves. After the display shape of the foreground image is determined, deformation processing is performed on the foreground image according to the display shape, and the foreground image is drawn at a corresponding position in the background image.

After the above steps, synthesized pictures with variable background images, variable layouts and variable foreground element shapes and presentation forms can be generated.

Corresponding to the above procedure, the embodiments of the present application further provide an apparatus for generating a synthesized picture. The apparatus may be implemented using software, and may also be implemented using hardware or a combination of software and hardware. Taking the software implementation as an example, as an apparatus in the logical sense, it is formed by a CPU (Central Process Unit) of a computing device where it is located to read a corresponding computer program instruction into a memory for running. From the hardware level, in addition to the CPU, memory and non-volatile memory shown in Fig. 6, the device where the apparatus for generating a synthesized picture is located generally further comprises other hardware such as a board card for implementing a network communication function, etc.

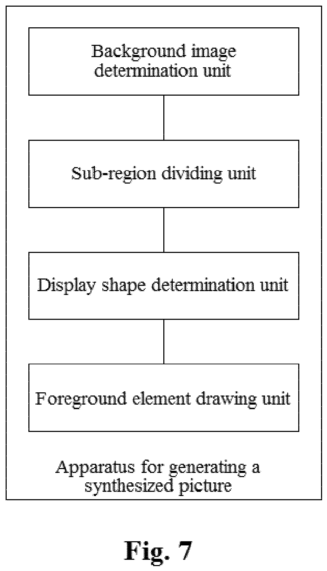

Fig. 7 shows an apparatus for generating a synthesized picture provided by this embodiment, comprising a background image determination unit, a sub-region dividing unit, a display shape determination unit and a foreground element drawing unit, wherein: the background image determination unit is configured to determine, based on a background picture set, a background image of the synthesized picture; the sub-region dividing unit is configured to divide sub-regions for foreground elements on the background image, each sub-region being used for displaying at least one foreground element; the display shape determination unit is configured to determine, within a sub-region, a display shape of a foreground element of the sub-region; and the foreground element drawing unit is configured to draw, according to the display shape, the corresponding foreground element within the sub-region.

Optionally, the sub-region dividing unit may further comprise a position relationship acquisition module, a dynamic region calculation module and a sub-region position and size module, wherein: the position relationship acquisition module is configured to acquire, from a configuration file, the number of sub-regions and a position relationship of at least some of the sub-regions; the dynamic region calculation module is configured to calculate, according to the position relationship, a region where a dynamic change is allowed for each sub-region on the background image; and the sub-region position and size module is configured to determine, within the region where a dynamic change is allowed, the vertex positions and size of the sub-region.

In one implementation, the foreground element comprises a foreground image; the display shape determination unit comprises a first curve function selection module, a first display curve generation module and a foreground image shape module, wherein: the first curve function selection module is configured to select at least one curve function from several pre-set curve functions; the first display curve generation module is configured to determine parameters of the curve function within a pre-set range, and generate at least one display curve; and the foreground image shape module is configured to extract points from the display curve as vertex positions of the foreground image, and take the display curve as a display boundary of the foreground image.

Optionally, the foreground element comprises a foreground image; and the foreground element drawing unit is specifically configured to: after performing, according to the display shape, affine transformation, perspective transformation and/or scaling transformation on the foreground image, draw the same within the sub-region.

Optionally, the foreground element comprises a text line; the display shape determination unit comprises a second curve function selection module, a second display curve generation module and a text line shape module, wherein: the second curve function selection module is configured to select a curve function from several pre-set curve functions; the second display curve generation module is configured to determine parameters of the curve function within a pre-set range, and generate a display curve; and the text line shape module is configured to extract, according to the number of text units in the text line, a corresponding number of points from the display curve as vertex positions of the text units.

Optionally, the foreground element drawing unit is specifically configured to: after adding, according to the display shape, texture and/or deformation to each text unit of the text line, draw the same within the sub-region.

It needs to be noted that the apparatus in the embodiments of the present application can be dispersed on two or more devices for implementation, such as being dispersed on a client device and a server for implementation.

In a typical configuration, a computing device includes one or more processors (CPUs), an input/output interface, a network interface and a memory.

The memory may include a non-permanent memory, a random access memory (RAM) and/or a non-volatile memory (such as a read-only memory (ROM) or flash memory (flash RAM)) and so on in computer-readable media. The memory is an example of the computer-readable media.

The computer-readable media comprise permanent and non-permanent, removable and non-removable media and may realize information storage with any method or technology. The information may be a computer-readable instruction, data structure, program module or other data. The examples of computer storage media include but are not limited to a phase change memory (PRAM), static random access memory (SRAM), dynamic random access memory (DRAM), other types of random access memory (RAM), read-only memory (ROM), electrically erasable programmable read-only memory (EEPROM), flash memory or other memory technologies, compact disk read-only memory (CD-ROM), digital versatile disc (DVD) or other optical storage, magnetic cassette tape, magnetic tape and magnetic disk storage or other magnetic storage devices or any other non-transmission media, which can be used to store information that can be accessed by a computing device. According to the definition herein, the computer-readable media do not include transitory media, such as modulated data signals and carriers.

It also needs to be noted that the terms "including", "comprising" or any other variations thereof are intended to cover non-exhaustive inclusion, so that processes, methods, merchants or devices including a series of elements not only include those elements but also include other elements which are not listed expressly or include all inherent elements of such processes, methods, merchants or devices. If there are no more limitations, elements defined by "comprising a ......" does not exclude the situation where other identical elements exist in the process, method, merchant or device including the elements.

It should be understood by those skilled in the art that the embodiments of the present application may be provided as methods, systems or computer program products. Thus, the present application may adopt full hardware embodiments, full software embodiments, or embodiments which combine software and hardware. Moreover, the present application may be in a form of a computer program product that is implemented on one or more computer-usable storage media (including, but not limited to, a disk memory, a CD-ROM, an optical memory, and the like) that include computer usable program codes.

## Claims

1. A method performed by a computing device for generating synthesized pictures that include foreground elements, the method comprising:
determining (110), based on a random selection from a background picture set, a background image for a synthesized picture from the synthesized pictures , wherein the synthesized picture includes the foreground elements, and wherein the background image is used in less than a pre-determined number of the synthesized pictures;
dividing (120) sub-regions dynamically for the foreground elements on the background image, each sub-region being used for displaying at least one of the foreground elements, wherein a configuration file includes limitation conditions for dividing the sub-regions on the background image, wherein the configuration file comprises a number of the sub-regions and a position relationship of at least some of the sub-regions,
automatically generating a first sub-region layout for positioning the sub-regions on the background image, wherein a specific position of each of the sub-regions is generated by a first execution of a layout algorithm using the configuration file, wherein a second execution of the layout algorithm generates a different sub-region layout for positioning the sub-regions;
determining dynamically (130), within each of the sub-regions, a respective display shape of a foreground element of the sub-region ; and
drawing (140), according to the respective display shape, each corresponding foreground element within each respective display shape within each respective sub-region.

2. The method according to claim 1, **characterized in that** determining, based on a background picture set, a background image for the synthesized picture comprises:
selecting one from several background pictures; and
after performing Gaussian blurring processing, light treatment processing and/or mask processing on the selected background picture, taking the processed background picture as the background image for the synthesized picture.

3. The method according to claim 1, **characterized in that** the dividing sub-regions for foreground elements on the background image comprises:
obtaining, from the configuration file, the number of the sub-regions and the position relationship of the at least some of the sub-regions;
calculating, according to the position relationship, a region where a dynamic change is allowed for each sub-region on the background image, a dynamic change being a change in a vertex position or a size of a sub-region; and
determining, within the region where a dynamic change is allowed, the vertex positions and size of the sub-region under the condition of satisfying the configuration file.

4. The method according to claim 3, wherein the configuration file comprises a pre-set file that describes the limitation conditions for dividing sub-regions for the foreground elements on the background image.

5. The method according to claim 4, wherein the configuration file further comprises a maximum value and/or minimum value of the shape and size of a sub-region.

6. The method according to claim 1, **characterized in that** the foreground element comprises a foreground image; and
determining, within a sub-region, a display shape of a foreground element of the sub-region comprises:
selecting at least one curve function from several pre-set curve functions;
determining parameters of the curve function within a pre-set range, and generating at least one display curve; and
extracting points from the display curve as vertex positions of the foreground image, and taking the display curve as a display boundary of the foreground image.

7. The method of any one of claims 1 or 6, **characterized in that** the foreground element comprises a foreground image; and
drawing, according to the display shape, the corresponding foreground element within the sub-region comprises:
after performing, according to the display shape, an affine transformation, a perspective transformation and/or a scaling transformation on the foreground image, drawing the transformed foreground element within the sub-region.

8. The method according to claim 7, wherein the foreground image is drawn within the sub-region after processing of color transformation, rotation, and/or stretching of the foreground image.

9. The method according to claim 1, **characterized in that** the foreground element comprises a text line; and
determining, within a sub-region, a display shape of a foreground element of the sub-region comprises:
selecting a curve function from several pre-set curve functions;
determining parameters of the curve function within a pre-set range, and generating a display curve; and
extracting, according to the number of text units in the text line, a corresponding number of points from the display curve as vertex positions of the text units.

10. The method according to claim 8, **characterized in that** the foreground element comprises a text line displayed on the foreground image; and
determining, within a sub-region, a display shape of a foreground element of the sub-region comprises determining, on the foreground image where the text line is displayed, a display shape of the text line.

11. The method according to any one of claims 1, 9, or 10, **characterized in that** drawing, according to the display shape, the corresponding foreground element within the sub-region comprises adding, according to the display shape, texture and/or deformation to each text unit of the text line, and then drawing the text line within the sub-region.

12. The method according to claim 11, wherein adding texture comprises adding horizontal, vertical or curved stripes at different intervals.

13. The method according to claim 11, wherein adding deformation comprises rotating and stretching.

14. The method according to any one of claims 1 to 13, wherein determining a background image based on the background picture set comprises selecting each background picture in the background picture set in turn.

15. An apparatus for generating a synthesized picture, the apparatus comprising multiple units configured to perform the method according to any one of claims 1 to 14.

## Patentansprüche

1. Verfahren, das von einem Rechengerät ausgeführt wird, um synthetisierte Bilder zu erzeugen, die Vordergrundelemente enthalten, das Verfahren Folgendes umfassend:
Bestimmen (110), basierend auf einer Zufallsauswahl aus einem Hintergrundbildsatz, eines Hintergrundbildes für ein synthetisiertes Bild aus den synthetisierten Bildern, wobei das synthetisierte Bild die Vordergrundelemente enthält, und wobei das Hintergrundbild in weniger als einer vorbestimmten Anzahl der synthetisierten Bilder verwendet wird;
dynamisches Unterteilen (120) von Teilbereichen für die Vordergrundelemente auf dem Hintergrundbild, wobei jeder Teilbereich zum Anzeigen mindestens eines der Vordergrundelemente verwendet wird, wobei eine Konfigurationsdatei Begrenzungsbedingungen zum Unterteilen der Teilbereiche auf dem Hintergrundbild enthält, wobei die Konfigurationsdatei eine Anzahl der Teilbereiche und eine Positionsbeziehung von mindestens einigen der Teilbereiche umfasst, automatisches Erzeugen eines ersten Teilbereichs-Layouts zum Positionieren der Teilbereiche auf dem Hintergrundbild, wobei eine spezifische Position jedes der Teilbereiche durch eine erste Ausführung eines Layout-Algorithmus unter Verwendung der Konfigurationsdatei erzeugt wird, wobei eine zweite Ausführung des Layout-Algorithmus ein anderes Teilbereichs-Layout zum Positionieren der Teilbereiche erzeugt;
dynamisches Bestimmen (130) einer jeweiligen Anzeigeform eines Vordergrundelements des Teilbereichs innerhalb jedes der Teilbereiche; und Zeichnen (140), entsprechend der jeweiligen Anzeigeform, jedes entsprechenden Vordergrundelements innerhalb der jeweiligen Anzeigeform innerhalb des jeweiligen Teilbereichs.

2. Verfahren nach Anspruch 1, **dadurch gekennzeichnet, dass** das Bestimmen, basierend auf einem Hintergrundbildsatz, eines Hintergrundbildes für das synthetisierte Bild Folgendes umfasst:
Auswählen eines von mehreren Hintergrundbildern; und
nach Durchführung der Gaußschen Unschärfeverarbeitung, Lichtbehandlungsverarbeitung und/oder Maskierungsverarbeitung auf dem ausgewählten Hintergrundbild, Verwenden des verarbeiteten Hintergrundbildes als Hintergrundbild für das synthetisierte Bild.

3. Verfahren nach Anspruch 1, **dadurch gekennzeichnet, dass** das Unterteilen von Teilbereichen für Vordergrundelemente auf dem Hintergrundbild Folgendes umfasst:
Erhalten, aus der Konfigurationsdatei, der Anzahl der Teilbereiche und des Positionsverhältnisses von zumindest einigen der Teilbereiche;
Berechnen, entsprechend dem Positionsverhältnis, eines Bereichs, in dem eine dynamische Änderung für jeden Teilbereich auf dem Hintergrundbild zulässig ist, wobei eine dynamische Änderung eine Änderung einer Scheitelpunktposition oder einer Größe eines Teilbereichs ist; und
Bestimmen, innerhalb des Bereichs, in dem eine dynamische Änderung zulässig ist, der Scheitelpunktpositionen und der Größe des Teilbereichs unter der Bedingung, dass die Konfigurationsdatei erfüllt ist.

4. Verfahren nach Anspruch 3, wobei die Konfigurationsdatei eine voreingestellte Datei umfasst, die die Begrenzungsbedingungen für die Unterteilung von Teilbereichen für die Vordergrundelemente auf dem Hintergrundbild beschreibt.

5. Verfahren nach Anspruch 4, wobei die Konfigurationsdatei ferner einen Maximalwert und/oder Minimalwert der Form und Größe eines Teilbereichs umfasst.

6. Verfahren nach Anspruch 1, **dadurch gekennzeichnet, dass** das Vordergrundelement ein Vordergrundbild umfasst; und
das Bestimmen, innerhalb eines Teilbereichs, einer Anzeigeform eines Vordergrundelements des Teilbereichs Folgendes umfasst:
Auswählen mindestens einer Kurvenfunktion aus mehreren voreingestellten Kurvenfunktionen;
Bestimmen von Parametern der Kurvenfunktion innerhalb eines voreingestellten Bereichs und Erzeugen mindestens einer Anzeigekurve; und
Extrahieren von Punkten aus der Anzeigekurve als Scheitelpunktpositionen des Vordergrundbildes und Verwenden der Anzeigekurve als Anzeigegrenze des Vordergrundbildes.

7. Verfahren nach einem der Ansprüche 1 oder 6, **dadurch gekennzeichnet, dass** das Vordergrundelement ein Vordergrundbild umfasst; und
das Zeichnen, gemäß der Anzeigeform, des entsprechenden Vordergrundelements innerhalb des Teilbereichs, Folgendes umfasst:
nach Durchführung, entsprechend der Anzeigeform, einer affinen Transformation, einer perspektivischen Transformation und/oder einer Skalierungstransformation auf dem Vordergrundbild, Zeichnen des transformierten Vordergrundelements innerhalb des Teilbereichs.

8. Verfahren nach Anspruch 7, wobei das Vordergrundbild innerhalb des Teilbereichs nach Verarbeitung einer Farbtransformation, Drehung und/oder Streckung des Vordergrundbildes gezeichnet wird.

9. Verfahren nach Anspruch 1, **dadurch gekennzeichnet, dass** das Vordergrundelement eine Textzeile umfasst; und
das Bestimmen, innerhalb eines Teilbereichs, einer Anzeigeform eines Vordergrundelements des Teilbereichs Folgendes umfasst:
Auswählen einer Kurvenfunktion aus mehreren voreingestellten Kurvenfunktionen;
Bestimmen von Parametern der Kurvenfunktion innerhalb eines voreingestellten Bereichs und Erzeugen einer Anzeigekurve; und
Extrahieren, entsprechend der Anzahl der Texteinheiten in der Textzeile, einer entsprechenden Anzahl von Punkten aus der Anzeigekurve als Scheitelpunktpositionen der Texteinheiten.

10. Verfahren nach Anspruch 8, **dadurch gekennzeichnet, dass** das Vordergrundelement eine Textzeile umfasst, die auf dem Vordergrundbild angezeigt wird; und
das Bestimmen, innerhalb eines Teilbereichs, einer Anzeigeform eines Vordergrundelements des Teilbereichs das Bestimmen, auf dem Vordergrundbild, wo die Textzeile angezeigt wird, einer Anzeigeform der Textzeile umfasst.

11. Verfahren nach einem der Ansprüche 1, 9 oder 10, **dadurch gekennzeichnet, dass** das Zeichnen, entsprechend der Anzeigeform, des entsprechenden Vordergrundelements innerhalb des Teilbereichs das Hinzufügen, entsprechend der Anzeigeform, von Textur und/oder Verformung zu jeder Texteinheit der Textzeile und das anschließende Zeichnen der Textzeile innerhalb des Teilbereichs umfasst.

12. Verfahren nach Anspruch 11, wobei das Hinzufügen von Textur das Hinzufügen von horizontalen, vertikalen oder gekrümmten Streifen in unterschiedlichen Abständen umfasst.

13. Verfahren nach Anspruch 11, wobei das Hinzufügen einer Verformung das Drehen und Strecken umfasst.

14. Verfahren nach einem der Ansprüche 1 bis 13, wobei das Bestimmen eines Hintergrundbildes auf der Grundlage des Hintergrundbildsatzes das Auswählen jedes Hintergrundbildes im Hintergrundbildsatz der Reihe nach umfasst.

15. Vorrichtung zum Erzeugen eines synthetisierten Bildes, wobei die Vorrichtung mehrere Einheiten umfasst, die dafür konfiguriert sind, das Verfahren nach einem der Ansprüche 1 bis 14 auszuführen.

## Revendications

1. Procédé effectué par un dispositif informatique pour générer des images synthétisées qui incluent des éléments de premier plan, le procédé consistant à :
déterminer (110), sur la base d'une sélection aléatoire à partir d'un ensemble d'images d'arrière-plan, une image d'arrière-plan pour une image synthétisée à partir des images synthétisées, l'image synthétisée comportant les éléments de premier plan et l'image d'arrière-plan étant utilisée en moins d'un nombre prédéterminé d'images synthétisées ;
diviser (120) des sous-régions de façon dynamique pour les éléments de premier plan sur l'image d'arrière-plan, chaque sous-région étant utilisée pour afficher au moins l'un des éléments de premier plan, un fichier de configuration comportant des conditions de limitation pour diviser les sous-régions sur l'image d'arrière-plan, le fichier de configuration comprenant un certain nombre de sous-régions et une relation de position d'au moins certaines des sous-régions, générant automatiquement une première disposition de sous-régions pour positionner les sous-régions sur l'image d'arrière-plan, une position spécifique de chacune des sous-régions étant générée par une première exécution d'un algorithme de disposition à l'aide du fichier de configuration, une seconde exécution de l'algorithme de disposition générant une disposition de sous-régions différente pour positionner les sous-régions ;
déterminer de façon dynamique (130), dans chacune des sous-régions, une forme d'affichage respective d'un élément de premier plan de la sous-région ; et
dessiner (140), selon la forme d'affichage respective, chaque élément de premier plan correspondant dans chaque forme d'affichage respective dans chaque sous-région respective.

2. Procédé selon la revendication 1, **caractérisé en ce que** la détermination, sur la base d'un ensemble d'images d'arrière-plan, d'une image d'arrière-plan pour l'image synthétisée consiste à :
sélectionner l'une parmi plusieurs images d'arrière-plan ; et
après avoir effectué un traitement du flou gaussien, un traitement de la lumière et/ou un traitement de masque sur l'image d'arrière-plan sélectionnée, prendre l'image d'arrière-plan traitée comme image d'arrière-plan pour l'image synthétisée.

3. Procédé selon la revendication 1, **caractérisé en ce que** la division des sous-régions pour les éléments de premier plan sur l'image d'arrière-plan consiste à :
obtenir, à partir du fichier de configuration, le nombre de sous-régions et la relation de position d'au moins certaines des sous-régions ;
calculer, selon la relation de position, une région où un changement dynamique est autorisé pour chaque sous-région sur l'image d'arrière-plan, un changement dynamique étant un changement dans une position de sommet ou une taille d'une sous-région ; et
déterminer, dans la région où un changement dynamique est autorisé, les positions des sommets et la taille de la sous-région à condition de satisfaire le fichier de configuration.

4. Procédé selon la revendication 3, dans lequel le fichier de configuration comprend un fichier prédéfini qui décrit les conditions de limitation pour diviser les sous-régions pour les éléments de premier plan sur l'image d'arrière-plan.

5. Procédé selon la revendication 4, dans lequel le fichier de configuration comprend en outre une valeur maximale et/ou une valeur minimale de la forme et de la taille d'une sous-région.

6. Procédé selon la revendication 1, **caractérisé en ce que** l'élément de premier plan comprend une image de premier plan ; et
la détermination, dans une sous-région, d'une forme d'affichage d'un élément de premier plan de la sous-région consiste à :
sélectionner au moins une fonction de courbe parmi plusieurs fonctions de courbe prédéfinies ;
déterminer les paramètres de la fonction de courbe dans une plage prédéfinie et générer au moins une courbe d'affichage ; et
extraire des points de la courbe d'affichage en tant que positions de sommet de l'image de premier plan et prendre la courbe d'affichage comme limite d'affichage de l'image de premier plan.

7. Procédé selon l'une quelconque des revendications 1 ou 6, **caractérisé en ce que** l'élément de premier plan comprend une image de premier plan ; et
le dessin, selon la forme d'affichage, de l'élément de premier plan correspondant dans la sous-région consiste à :
après avoir effectué, selon la forme d'affichage, une transformation affine, une transformation en perspective et/ou une transformation d'échelle sur l'image de premier plan, dessiner l'élément de premier plan transformé dans la sous-région.

8. Procédé selon la revendication 7, dans lequel l'image de premier plan est dessinée dans la sous-région après traitement de la transformation des couleurs, de la rotation et/ou de l'étirement de l'image de premier plan.

9. Procédé selon la revendication 1, **caractérisé en ce que** l'élément de premier plan comprend une ligne de texte ; et
la détermination, dans une sous-région, d'une forme d'affichage d'un élément de premier plan de la sous-région consiste à :
sélectionner une fonction de courbe parmi plusieurs fonctions de courbe prédéfinies ;
déterminer les paramètres de la fonction de courbe dans une plage prédéfinie et générer une courbe d'affichage ; et
extraire, en fonction du nombre d'unités de texte dans la ligne de texte, un nombre correspondant de points de la courbe d'affichage en tant que positions de sommet des unités de texte.

10. Procédé selon la revendication 8, **caractérisé en ce que** l'élément de premier plan comprend une ligne de texte affichée sur l'image de premier plan ; et
la détermination, dans une sous-région, d'une forme d'affichage d'un élément de premier plan de la sous-région consiste à déterminer, sur l'image de premier plan où la ligne de texte est affichée, une forme d'affichage de la ligne de texte.

11. Procédé selon l'une quelconque des revendications 1, 9 ou 10, **caractérisé en ce que** le dessin, selon la forme d'affichage, de l'élément de premier plan correspondant dans la sous-région consiste à ajouter, selon la forme d'affichage, la texture et/ou la déformation à chaque unité de texte de la ligne de texte, puis dessiner la ligne de texte dans la sous-région.

12. Procédé selon la revendication 11, dans lequel l'ajout de texture consiste à ajouter des rayures horizontales, verticales ou incurvées à différents intervalles.

13. Procédé selon la revendication 11, dans lequel l'ajout de déformation comprend la rotation et l'étirement.

14. Procédé selon l'une quelconque des revendications 1 à 13, dans lequel la détermination d'une image d'arrière-plan sur la base de l'ensemble d'images d'arrière-plan comprend la sélection successive de chaque image d'arrière-plan dans l'ensemble d'images d'arrière-plan.

15. Appareil pour générer une image synthétisée, l'appareil comprenant plusieurs unités configurées pour exécuter le procédé selon l'une quelconque des revendications 1 à 14.
